# EUROPEAN PATENT SPECIFICATION

(11) **EP 3 170 616 B1**
(45) Date of publication and mention of the grant of the patent: **23.12.2020**
(21) Application number: 15822552.4
(22) Date of filing: 16.07.2015
(51) Int. Cl.: B23K 9/02

(54) **METHOD OF SINGLE SUBMERGED ARC WELDING OF HIGH-CR CSEF STEEL**
VERFAHREN ZUM EINZELNEN UNTERPULVERSCHWEISSEN VON CSEF-STAHL MIT HOHEM CR-GEHALT
PROCÉDÉ DE SOUDAGE À ARC SUBMERGÉ UNIQUE D'ACIER FERRITIQUE À RÉSISTANCE AMÉLIORÉE À TENEUR EN CR ÉLEVÉE

(30) Priority: 18.07.2014 JP 2014147995
(43) Date of publication of application: 24.05.2017
(73) Proprietor: Kabushiki Kaisha Kobe Seiko Sho (Kobe Steel, Ltd.), Kobe-shi, Hyogo 651-8585 (JP)
(72) Inventor: YAMASHITA, Ken, Kanagawa 251-8551 (JP); IKAI, Kazuya, Kanagawa 251-8551 (JP)
(74) Representative: Müller-Boré & Partner Patentanwälte PartG mbB
(86) International application number: PCT/JP2015/070433
(87) International publication number: WO 2016/010121

(56) References cited:
- JP-A- S5 067 758
- JP-A- S6 376 789
- JP-A- H05 285 691
- JP-A- H05 285 691
- JP-A- H07 204 885
- JP-A- H07 214 325
- JP-A- H07 214 325
- JP-A- H09 277 084
- JP-A- H09 277 084
- JP-A- H10 156 534
- JP-A- S63 220 993
- JP-A- 2005 329 415

## Description

The present invention relates to a single submerged arc welding method for a high-Cr Creep Strength-Enhanced Ferritic (CSEF) steel.

Thermal power boilers and turbines and chemical reaction containers (reactors) for desulfurization or reformulation (heavy-oil decomposition) are used at a high temperature and a high pressure. Thus, examples of material suitable for these equipment include 1.25Cr-0.5Mo steel, 2.25Cr-1.0Mo steel, and 2.25Cr-1.0Mo-V steel. In recent years, the more effective use of heavy oil and the more efficient refining of petroleum have been required. Applications of a high-Cr CSEF steel having a Cr content of 8% by mass or more have been studied. Examples of the high-Cr CSEF steel include SA387Gr.91 and SA213Gr.T91 that are defined by American Society for Testing and Materials (ASTM) standard or American Society of Mechanical Engineers (ASME) standard.

Such thermal power boilers and turbines and reactors are produced by appropriately combining and welding forged rings or pipes and bent steel sheets . Specifically, a forged ring can have a thickness of 150 to 450 mm, a maximum outer diameter of about 7m or less, and an entire length of several to several tens of meters. Examples of welding methods suitable for use in thermal power boilers and turbines and reactors include a shielded metal arc welding, a tungsten inert gas (TIG) welding, and a submerged arc welding. In thermal power boilers, turbines, or the reactors, welded parts occupy a large proportion of the entire structure, and thus they are strongly required to reduce the amount of weld material and to make the welding more effective.

In general, to reduce the amount of weld material, a method is proposed that uses a narrow groove with a narrowed groove width and a small groove angle. In terms of the more effective welding, a submerged arc welding is used more often than other welding methods because of its high efficiency. However, in the submerged arc welding for a high-Cr CSEF steel, the method that involves decreasing either the groove width or groove angle is disadvantageous in terms of hot cracking during welding. To suppress the hot cracking and achieve the more effective welding in the submerged arc welding, the following techniques are disclosed.

For example, Patent Document 1 discloses a welding wire for a Mod. 9Cr-1Mo steel that contains predetermined amounts of C, Si, Mn, Ni, Cr, Mo, V, Nb, and N, while the total amount of Mn and Ni is limited to a predetermined amount, in which the amounts of P, S, Cu, Ti, Al, B, W, Co, and O are limited to predetermined amounts, with the balance being Fe and inevitable impurities. The technique mentioned in Patent Document 1 is designed to limit the C content to 0.070 to 0.150% by mass, and each of the P content and the S content to 0.010% by mass or less, thereby suppressing hot cracking.

Patent Document 2 discloses a submerged arc welding method for a 9Cr-1Mo steel that performs welding by using a combination of a wire and a welding flux. The wire contains predetermined amounts of C, Mn, Cr, Mo, Ni, V, Nb, Al, and N, and further contains Si and O in limited predetermined amounts. The welding flux contains respective predetermined amounts of one or two of CaF₂, CaO and MgO, one or two of Al₂O₃ and ZrO₂, and Al, and further contains SiO₂ in a limited predetermined amount. Specifically, the technique mentioned in Patent Document 2 uses the combination of the wire and the welding flux, the wire including 0.01 to 0.15 wt% of C, 0.005 to 1.5 wt% of Al, and 0.05 wt% or less of Si, the wiring flux including 5 wt% or less of SiO₂ (not substantially containing Si) and 25 to 70 wt% of CaF₂, thereby suppressing hot cracking. Patent Document 3 (prior art of the present application), describes a submerged arc welding method for high-Cr ferritic heat resisting steel. Patent Document 4 discloses a submerged arc welding method for high-chromium ferritic heat resisting steel. Patent Document 5 describes a submerged arc welding method for high-Cr ferritic heat resisting steel.

Patent Document 1: JP 4476018 B1
Patent Document 2: JP 2529843 B1
Patent Document 3: JP H07/214325 A
Patent Document 4: JP H09/277084 A
Patent Document 5: JP H05/285691 A

However, in the related art, the submerged arc welding for the high-Cr CSEF steel has the following problems.

The welding wire for the Mod.9Cr-1Mo steel mentioned in Patent Document 1 is a thin wire having a wire diameter of 2.4 mmφ. Thus, in some cases, the arc spread from the wire is so poor that a lack of fusion is more likely to occur, failing to produce a sound weld bead. Meanwhile, hot cracking often occurs when using a thick wire having a wire diameter of 4.0 mmφ to perform the submerged arc welding.

In the submerged arc welding method for the 9Cr-1Mo steel mentioned in Patent Document 2, the wire and the welding flux are designed to have a small content of Si, whereby a bead shape or wettability of an initial layer is degraded to cause the lack of fusion or slag inclusions in overlapped welds in some cases. That is, the soundness of weld beads might sometimes be degraded.

In general, welding efficiency can be enhanced by increasing a welding heat input, that is, by increasing a welding current and an arc voltage and lowering a welding speed. However, when increasing the welding heat input, the shape of a penetration, especially, at a narrow groove tends to take a pear shape, increasing the risk of occurrence of hot cracking. The hot cracking, which is the issue here, is the so-called hot cracking caused by segregation of a low-melting point compound of P, S, Si, and Nb contained in a molten metal, between dendrites or at an austenite crystal grain boundary in solidification, followed by imparting a welding contraction strain thereto. As measures against the hot cracking, it is effective to adjust chemical components in a weld material, specifically, to reduce a concentration of impurities, including P and S, to 100 ppm or less by an extra high purity (EHP) fusion. However, the extra high purity fusion must use electron beam melting or a special furnace-wall refractory material, which is disadvantageous from an economical perspective. For this reason, a technique is required to be capable of suppressing the occurrence of hot cracking even at a normal impurity level.

The present invention has been made in view of the foregoing circumstances. It is an object of the present invention to provide a welding method that can suppress hot cracking in an initial layer in a single submerged arc welding for a high-Cr CSEF steel.

The inventors have diligently sought for causes of hot cracking of a weld metal in an initial layer of a high-Cr CSEF steel formed by the submerged arc welding. Consequently, it has found that the occurrence of hot cracking in the initial layer of the high-Cr CSEF steel formed by the submerged arc welding is due to the fact that carbon (C) is picked up into the weld metal by dilution from a high-Cr CSEF steel base metal, thereby decreasing the melting point of a molten metal, causing the hot cracking. It should be noted that the C content in the high-Cr CSEF steel is 0.08 to 0.12% by mass in ASTM A182 Gr. F91; 0.07 to 0.13% by mass in Gr. F92; 0.07 to 0.14% by mass in Gr. F122; and 0.09 to 0.13% by mass in Gr. F911.

As a result of further diligent study, a submerged arc welding is performed using a combination of a wire and a flux, the wire including less than 0.05% by mass of C, 0.055% by mass or less of N, and more than 0.05% by mass and 0.30% by mass or less of Si, the flux including, 2 to 30% by mass of CaF₂, 2 to 20% by mass of CaO, 20 to 40% by mass of MgO, 5 to 25% by mass of Al₂O₃, and 5 to 25% by mass of Si and SiO₂ in total (in terms of SiO₂), and the flux further including, in limited amounts, 25% by mass or less of BaO, 10% by mass or less of ZrO₂, and less than 5% by mass of TiO₂, which can suppress hot cracking in an initial layer while ensuring the welding efficiency and the soundness of a weld bead.

In the same study, particularly, regarding wires, the consideration was also made on austenite-based stainless wires, such as 308L and 309L, and Ni-based wires, such as Inconel 625, Inconel 82, and Hastelloy. It is concluded that these kinds of wires produce a weld metal with a high Ni content, which is overlapped on the initial layer, and thus, such wires cannot be used for a high-Cr CSEF steel welding joint.

A method of single submerged arc welding i of a high-Cr CSEF steel according to the present invention is defined in claim 1, and single submerged arc welding using a combination of a welding wire and a welding flux, the welding wire including less than 0.05% by mass of C, 0.055% by mass or less of N, and more than 0.05% by mass and 0.30% by mass or less of Si, with the balance being Fe and inevitable impurities, the welding flux including 2 to 30% by mass of CaF₂, 2 to 20% by mass of CaO, 20 to 40% by mass of MgO, 5 to 25% by mass of Al₂O₃, and 5 to 25% by mass of Si and SiO₂ in total (in terms of SiO₂), and the flux further including, in limited amounts, 25% by mass or less of BaO, 10% by mass or less of ZrO₂, and less than 5% by mass of TiO₂, wherein the high-Cr CSEF steel is a high-Cr Creep Strength-Enhanced Ferritic steel and includes 0.07 to 0.14% by mass of C, 0.50% by mass or less of Si, 0.70% by mass or less of Mn, 0.025% by mass or less of P, 0.015% by mass or less of S, 0.50% by mass or less of Ni, 8.00 to 11.50% by mass of Cr, 0.25 to 1.10% by mass of Mo, 0.15 to 0.35% by mass of V, 0.04 to 0.10% by mass of Nb, and 0.03 to 0.10% by mass of N, Optionally 1.70% by mass or less of Cu, 0.060% by mass or less of B, 2.50% by mass or less of W, and 3.0% by mass or less of Co, with the balance being Fe and inevitable impurities..

The welding method with this arrangement performs the single submerged arc welding by using the combination of the welding wire with a specific composition and the welding flux with a specific composition, thereby making it possible to suppress hot cracking in the initial layer due to picking up C from a base metal.

In the single submerged arc welding method for a high-Cr CSEF steel in the present invention, preferably, the welding wire further includes one or more elements selected from Mn, Ni, Cr, Mo, V, Nb, W, Co, and B, wherein a Mn content is 2.20% by mass or less, a Ni content is 1.00% by mass or less, a Cr content is 10.50% by mass or less, a Mo content is 1.20% by mass or less, a V content is 0.45% by mass or less, a Nb content is 0.080% by mass or less, a W content is 2.0% by mass or less, a Co content is 3.0% by mass or less, and a B content is 0.005% by mass or less.

The welding method with this arrangement uses the welding wire containing a specific element, thereby making it possible to improve the toughness and the creep rupture strength of a weld metal.

The single submerged arc welding method for a high-Cr CSEF steel in the present invention preferably performs the welding at a wire feeding speed (V) of 50 to 120 g/min, a welding speed (v) of 20 to 60 cm/min, and a welding amount per unit length (V/v) of 1.8 to 4.5 g/cm that is determined by calculating the ratio of the wire feeding speed to the welding speed.

The welding method with this arrangement controls the wire feeding speed (V), the welding speed (v), and the welding amount per unit length (V/v) within predetermined preferable ranges, thereby more surely suppressing the hot cracking, lack of fusion, and slag inclusions, enabling the achievement of the high welding efficiency.

In the single submerged arc welding method for a high-Cr CSEF steel in the present invention, a distance between a tip and a base metal is preferably in a range of 20 to 40 mm.

The welding method with this arrangement can surely suppress the excessive erosion and welding amount due to the arc from the tip.

In the single submerged arc welding method for a high-Cr CSEF steel in the present invention, a tip angle is preferably set such that a drag angle α is in a range of up to 60°, and a push angle β is in a range of up to 60°.

The welding method with this arrangement can more surely stabilize the welding-wire feeding speed.

In the single submerged arc welding method for a high-Cr CSEF steel in the present invention, a tip shape is preferably a straight tube shape or a bent square tubing shape.

The welding method with this arrangement can ensure the wire feedability and the stabilization of a power-feeding position more reliably.

The single submerged arc welding method for a high-Cr CSEF steel in the present invention can suppress hot cracking of the initial layer, that is, hot cracking in a first one-layer-one-pass procedure.
Fig. 1 is a cross-sectional view showing the shape of a narrow groove and the form of an initial layer of a weld metal in a welding method of the present invention;
Fig. 2 is a front view showing the shape of a tip (welding tip) in the welding method of the present invention;
Fig. 3 is a side view of the tip shown in Fig. 2;
Fig. 4 is an end view of a leading end side of the tip shown in Fig. 2;
Fig. 5 is another front view showing the shape of the tip in the welding method of the present invention;
Fig. 6 is another front view showing the shape of the tip in the welding method of the present invention;
Fig. 7 is another front view showing the shape of the tip in the welding method of the present invention;
Fig. 8 is another front view showing the shape of the tip in the welding method of the present invention;
Fig. 9 is another front view showing the shape of the tip in the welding method of the present invention;
Fig. 10 is another front view showing the shape of the tip in the welding method of the present invention;

Embodiments for implementing the present invention will be described in detail below. Note that the present invention is not intended to be limited by the following respective embodiments.

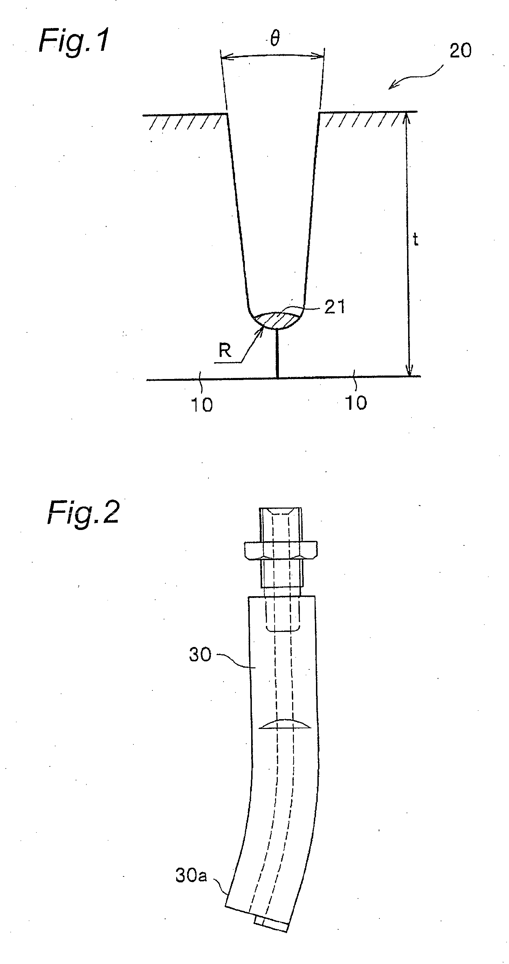

A welding method of the present invention is a single submerged arc welding method for a high-Cr CSEF steel. In particular, as shown in Fig. 1, the welding method is suitable for use in welding of an initial layer at a narrow groove, especially, welding for the one-layer-one-pass procedure.

### <Base Metal>

The single submerged arc welding method in the present invention is performed on a high-Cr CSEF steel as a base metal (material to be welded) . The term "high-Cr CSEF steel" as used herein and according to the present invention, means a CSEF steel that contains 8% by mass or more of Cr. The high-Cr CSEF steels are defined by various standards. Examples of the high-Cr CSEF steels can include SA387Gr. 91, Gr.122, Gr. 92, Gr. 911, and SA213Gr. T91, which are defined by ASTM standard or ASME standard; X10CrMoVNb9-1 defined by EN standard (European standard); and Ka-SFVAF28, Ka-SFVAF29, Ka-STBA28, Ka-STPA28, and Ka-SCMV28 defined by "Technical Standard for Thermal Power Generation".

The chemical composition of the base metal contains predetermined amounts of C, Si, Mn, P, S, Ni, Cr, Mo, V, Nb, and N with the balance being Fe and inevitable impurities. Further, the chemical composition of the base metal may contain predetermined amounts of Cu, B, W, and Co (one or more elements selected from these four elements). According to the present invention, the base metal includes 0.07 to 0.14% by mass of C, 0.50% by mass or less of Si, 0.70% by mass or less of Mn, 0.025% by mass or less of P, 0.015% by mass or less of S, 0.50% by mass or less of Ni, 8.00 to 11.50% by mass of Cr, 0.25 to 1.10% by mass of Mo, 0.15 to 0.35% by mass of V, 0.04 to 0.10% by mass of Nb, and 0.03 to 0.10% by mass of N, with the balance being Fe and inevitable impurities. The base metal may further contain 1.70% by mass or less of Cu, 0.060% by mass or less of B, 2.50% by mass or less of W, and 3.0% by mass or less of Co.

### <Welding Wire>

The welding wire used in the method of the present invention includes less than 0.05% by mass of C, 0.055% by mass or less of N, more than 0.05% by mass and 0.50% by mass or less of Si, with the balance being Fe and inevitable impurities. The reasons for specifying the contents of respective components will be described below.

### (C in the welding wire: less than 0.05% by mass)

Hot cracking in an initial layer is caused by a decrease in the melting point of the molten metal due to an excessive carbon (C) content in the molten metal by the dilution of the base metal. The high-Cr CSEF steel to which the present invention is directed is designed to have a high C content in order to ensure the creep strength. As a result of examination, a dilution ratio of the base metal on the initial layer in the submerged arc welding is found to be around 50%. Although the reduction in dilution of the base metal can be achieved to some extent by adjusting the welding conditions, the composition of a welding material must be designed by taking into consideration variations in working practices. Based on the findings above, the C content in the welding wire is set at less than 0.05% by mass.

### (N in the welding wire: 0.055% by mass or less)

Nitrogen (N) is known as an element that serves to effectively improve the creep strength in a high-Cr CSEF steel and a weld metal thereof. However, when the N content is more than 0.055% by mass and becomes excessive, slag sticking occurs. Thus, the N content in the welding wire is set at 0.055% by mass or less. The upper limit of the N content in the welding wire is preferably 0.05% by mass.

### (Si in the welding wire: more than 0.05% by mass and 0.50% by mass or less)

Silicon (Si) has the effect of adjusting the viscosity of a weld metal to make a bead shape appropriate. However, when the Si content is 0.05% by mass or less, the above effect cannot be obtained, and the wettability is degraded, resulting in the defective bead shape. On the other hand, when the Si content exceeds 0.50% by mass, slag sticking occurs, making it difficult to remove slags. Thus, the Si content in the welding wire is set at more than 0.05% by mass and 0.50% by mass or less. The upper limit of the Si content in the welding wire is preferably set at 0.48% by mass or less, and more preferably 0.45% by mass or less.

The above-mentioned requirements for C, N, and Si are essential as the composition of the welding wire. The welding wire can contain, as other components, one or more elements selected from the group consisting of Mn, Ni, Cr, Mo, V, Nb, W, Co, and B. When the welding wire contains the above respective elements, the contents of these elements are preferably set within the following ranges.

Manganese (Mn) serves as a deoxidizing agent and has the effect of reducing the content of oxygen in a weld metal to improve the toughness of the weld metal. Mn is an austenite forming element and has the effect of suppressing degradation in the toughness of a weld metal due to the residual δ-ferrite in the weld metal. However, when the Mn content in the welding wire exceeds 2.20% by mass, the toughness of the weld metal is degraded. Thus, to sufficiently obtain the above-mentioned effects, the Mn content in the welding wire is preferably set at 2.20% by mass or less, and more preferably 2.15% by mass or less.

Nickel (Ni) is an austenite forming element, like Mn, and has the effect of suppressing degradation in the toughness of a weld metal due to the residual δ-ferrite in the weld metal. However, when the Ni content in the welding wire exceeds 1.00% by mass, the toughness of the weld metal is degraded. Thus, to sufficiently obtain the above-mentioned effects, the Ni content in the welding wire is preferably set at 1.00% by mass or less, and more preferably 0.95% by mass or less.

Chromium (Cr) is a main element of the high-Cr CSEF steel, which is the base metal in the welding method of the present invention. Cr is essential to impart the resistance to oxidation and high-temperature strength to the base metal and thus is preferably contained in the welding wire as well. However, since Cr is a ferrite forming element, when the content of Cr is more than 10.50% by mass and becomes excessive, the residual δ-ferrite is induced, thus degrading the toughness of the weld metal. Thus, to sufficiently obtain the above-mentioned effects, the Cr content in the welding wire is preferably set at 10.50% by mass or less, and more preferably 10.45% by mass or less.

Molybdenum (Mo) is a solid-solution strengthening element and has the effect of improving the creep rupture strength of a weld metal. However, since Mo is a ferrite forming element, when the content of Mo is more than 1.20% by mass and becomes excessive, the residual δ-ferrite in a weld metal is induced, thus degrading the toughness of the weld metal. Thus, to sufficiently obtain the above-mentioned effects, the Mo content in the welding wire is preferably set at 1.20% by mass or less, and more preferably 1.18% by mass or less.

Vanadium (V) is a precipitation strengthening element and has the effect of improving the creep rupture strength of a weld metal because it is precipitated as a carbonitride. However, since V is also a ferrite forming element, when the content of V is more than 0.45% by mass and becomes excessive, the residual δ-ferrite in a weld metal is induced, thus degrading the toughness of the weld metal. Thus, to sufficiently obtain the above-mentioned effects, the V content in the welding wire is preferably set at 0.45% by mass or less, and more preferably 0.40% by mass or less.

Niobium (Nb) is an element that contributes to the stabilization of the creep rupture strength by solid-solution strengthening and precipitating as a nitride. However, since Nb is also a ferrite forming element, when the content of Nb is more than 0.080% by mass and becomes excessive, the residual δ-ferrite in a weld metal is induced, thus degrading the toughness of the weld metal. Thus, to sufficiently obtain the above-mentioned effects, the Nb content in the welding wire is preferably set at 0.080% by mass or less, and more preferably 0.078% by mass or less .

Tungsten (W) is an element that contributes to the stabilization of the creep rupture strength by solid-solution strengthening of a matrix and precipitation of fine carbide particles. However, since W is also a ferrite forming element, when the content of W is more than 2.0% by mass and becomes excessive, the residual δ-ferrite in the weld metal is induced, thus degrading the toughness of the weld metal. Thus, to sufficiently obtain the above-mentioned effects, the W content in the welding wire is preferably set at 2.0% by mass or less, more preferably 1.8% by mass or less, and even more preferably 1.7% by mass or less.

Cobalt (Co) is an element that suppresses the residual δ-ferrite. However, any excessive Co content, which is more than 3.0% by mass, decreases the A_{c1} temperature, making it impossible to carry out a high-temperature tempering, failing to stabilize the microstructure of the weld metal. Thus, to sufficiently obtain the above-mentioned effects, the Co content in the welding wire is preferably set at 3.0% by mass or less, more preferably 2.0% by mass or less, and even more preferably 1.8% by mass or less.

Boron (B) has the effects of dispersing and stabilizing carbide particles when added even in a small amount and enhancing the creep rupture strength of the weld metal. However, any excessive B content, which is more than 0.005% by mass, causes hot cracking. Thus, to sufficiently obtain the above-mentioned effects, the B content in the welding wire is preferably set at 0.005% by mass or less, more preferably 0.003% by mass or less, and even more preferably 0.0015% by mass or less.

Each of phosphor (P) and sulfur (S) is an element that enhances the sensitivity to hot cracking of a weld metal. When the P content exceeds 0.015% by mass, or when the S content exceeds 0.010% by mass, the resistance to hot cracking is degraded. Accordingly, the P content in the welding wire is preferably limited to 0.015% by mass or less, and more preferably to 0.010% by mass or less. Furthermore, the S content in the welding wire is preferably limited to 0.010% by mass or less, and more preferably to 0.009% by mass or less.

The remaining components of the welding wire include Fe and inevitable impurities. Examples of inevitable impurities can include Al and Ti.

### <Welding Flux>

The welding flux used in the single submerged arc welding method in the present invention includes 2 to 30% by mass of CaF₂, 2 to 20% by mass of CaO, 20 to 40% by mass of MgO, 5 to 25% by mass of Al₂O₃, and 5 to 25% by mass of Si and SiO₂ in total (in terms of SiO₂), and further includes, in limited amounts, 25% by mass or less of BaO, 10% by mass or less of ZrO₂, and less than 5% by mass of TiO₂. The reasons for specifying the contents of respective components will be described below.

### (CaF₂ in the welding flux: 2 to 30% by mass)

CaF₂ has the function of enhancing the fluidity by decreasing a melting point of a slag to adjust the bead shape. However, when the CaF₂ content in the welding flux is less than 2% by mass, the above-mentioned effect cannot be obtained sufficiently, resulting in the defective bead shape. On the other hand, when the CaF₂ content in the flux exceeds 30% by mass, the arc becomes unstable, generating a circle recessed portion, called a pock mark, on the surface of a bead, thus degrading the surface texture of the bead. The bead in the initial layer of the high-Cr CSEF steel to which the present invention is directed remarkably exhibits this tendency. The defective bead shape and the defective bead surface texture will affect the overlapped beads very adversely. Thus, the CaF₂ content in the welding flux is set at 2 to 30% by mass. Preferably, the lower limit of the CaF₂ content in the welding flux is 3% by mass, while the upper limit thereof is 29% by mass.

### (CaO in the welding flux: 2 to 20% by mass)

CaO has the effect of adjusting the viscosity of a slag to control the bead shape. CaO, like MgO and BaO to be mentioned later, is a component that has high fire resistance. CaO is extremely effective in adjusting the melting properties of a flux to control the bead shape, specifically, when using a flux containing CaF₂ that tends to decrease the melting point of a slag, like the flux used in the present invention. However, when the CaO content in the welding flux is less than 2% by mass, this effect cannot be obtained, resulting in a defective bead shape. On the other hand, when the CaO content in the welding flux exceeds 20% by mass, the fire resistance of the welding flux is enhanced and thereby is less likely to melt, resulting in a defective bead surface texture. Thus, the CaO content in the welding flux is set at 2 to 20% by mass. Preferably, the lower limit of the CaO content in the welding flux is 5% by mass, while the upper limit thereof is 17% by mass.

### (MgO in the welding flux: 20 to 40% by mass)

MgO also has the effect of adjusting the viscosity of a slag to control the bead shape. Furthermore, MgO is effective in improving the slag removability. Like CaO and BaO, MgO is a component that has high fire resistance. MgO is extremely effective in adjusting the melting properties of a flux to control the bead shape, specifically, for the flux used in the present invention, in which a large amount of CaF₂ that tends to decrease the melting point of a slag is used. However, when the MgO content in the welding flux is less than 20% by mass, this effect cannot be obtained, resulting in a defective bead shape. On the other hand, when the MgO content in the welding flux exceeds 40% by mass, the fire resistance of the welding flux is enhanced and thereby is less likely to melt, resulting in a defective bead surface texture. Thus, the MgO content in the welding flux is set at 20 to 40% by mass. Preferably, the upper limit of the MgO content in the welding flux is 35% by mass.

### (Al₂O₃ in the welding flux: 5 to 25% by mass)

Al₂O₃ has the effects of enhancing the concentration and stability of the arc, and adjusting the fluidity of a slag by increasing the melting point of the slag contrary to CaO, so that the bead shape is controlled. However, when the Al₂O₃ content in the welding flux is less than 5% by mass, this effect cannot be obtained, producing an unstable arc, increasing spatter, while degrading the bead shape and bead surface texture. On the other hand, when the Al₂O₃ content in the welding flux exceeds 25% by mass, the slag sticking would occur. In terms of preventing delayed fracture, the high-Cr CSEF steel to which the present invention is directed must set the preheating and inter-pass temperatures higher, compared to a soft steel and a low-alloy heat-resistant steel, such as or 2.25Cr-1Mo steel. Thus, especially, the slag sticking tends to easily occur. The slag sticking significantly adversely affects the overlapped beads. Thus, the Al₂O₃ content in the welding flux is set at 5 to 25% by mass. Preferably, the lower limit of the Al₂O₃ content in the welding flux is 8% by mass, while the upper limit thereof is 22% by mass.

### (The total of Si and SiO₂ in the welding flux: 5 to 25% by mass in total (in terms of SiO₂))

SiO₂ increases the viscosity of a slag, particularly, improving the wettability of a toe of a bead. On the other hand, any excessive content of SiO₂ decreases the melting point of a slag, degrading a bead surface texture, while excessively make the slag brittle, whereby the slags cannot be removed continuously and uniformly, causing partially strong slag sticking to the bead surface. The same goes for Si that is appropriately added to the welding flux as a deoxidizing agent, as well as SiO₂ that is used in liquid glass as a fixing agent during granulation of the welding flux. For this reason, the total content of Si and SiO₂ in the flux, including Si and SiO₂ in the forms mentioned above, needs to be limited. Accordingly, the total content of Si and SiO₂ in the flux is set at 5 to 25% by mass in terms of SiO₂. The upper limit of the total content of Si and SiO₂ in the welding flux is preferably 20% by mass.

As can be seen from the outline mentioned above, the term "total of Si and SiO₂" as used herein means the total amount of Si in the form of SiO₂ and Si in any form other than SiO₂. The "total of Si and SiO₂" represented "(in terms of SiO₂)" is the sum of two amounts, which consists of an amount of SiO₂ for Si in the form of SiO₂ and an amount obtained by converting an amount of Si in any form other than SiO₂ into an amount of SiO₂.

### (BaO in the welding flux: 25% by mass or less)

Like CaO, BaO has the effect of adjusting the viscosity of a slag to control the bead shape. Furthermore, BaO has the effect of improving the resistance to embrittlement of the slag itself, and thereby consequently suppressing the slag sticking. However, any excessive BaO content enhances the fire resistance of the welding flux, so that the welding flux is less likely to melt, degrading the bead surface texture. Thus, the BaO content in the welding flux is set at 25% by mass or less. The upper limit of the BaO content in the welding flux is preferably 22% by mass.

### (ZrO₂ in the welding flux: 10% by mass or less)

Like Al₂O₃, ZrO₂ also has the effect of adjusting the fluidity of a slag by increasing the melting point of the slag to control the bead shape. However, any excessive ZrO₂ content enhances the fire resistance of the welding flux, so that the welding flux is less likely to melt, degrading the bead surface texture. Thus, the ZrO₂ content in the welding flux is set at 10% by mass or less.

### (TiO₂ in the welding flux: less than 5% by mass)

TiO₂ has the effect of enhancing the coatability of a slag on a bead. However, any excessive TiO₂ content causes the slag sticking. Thus, the TiO₂ content in the welding flux is set at less than 5% by mass.

The above-mentioned requirements are essential for the welding flux composition. These components can be added alone or in combination as a compound containing some of them, or in the form of mineral or a molten flux. For example, CaF₂ may be added as fluorite; CaO as lime and a molten flux; MgO as magnesia clinker and a molten flux; Al₂O₃ as alumina and a molten flux; and SiO₂ added as potassium feldspar, soda feldspar and a molten flux. To the welding flux, an alloy powder, an oxide, and a fluoride can be added as appropriate, in addition to the above-mentioned components, in order to adjust the alloy composition and the welding workability.

In the single submerged arc welding method for the high-Cr CSEF steel according to the present invention, the compositions of the welding wire and the welding flux are specified as mentioned above, and in addition to this, the feeding speed, welding speed, and welding amount per unit welding length of the welding wire are preferably set at predetermined values. Various welding conditions in the welding method will be described below.

### (Feeding Speed V of Welding Wire: 50 to 120 g/min)

When a feeding speed V of the welding wire is lower than 50 g/min, the welding current becomes extremely low, making the arc unstable, which might cause penetration failure . On the other hand, when a feeding speed V of the welding wire is higher than 120 g/min, the welding amount becomes extremely large, which might cause hot cracking. Accordingly, the feeding speed V of the welding wire is preferably set at 50 to 120 g/min.

### (Welding Speed v: 20 to 60 cm/min)

When a welding speed v is lower than 20 cm/min, the welding amount becomes extremely large, which might cause hot cracking. On the other hand, when the welding speed v exceeds 60 cm/min, the supply of a molten metal cannot catch up with the welding speed, making the bead shape unstable, which might result in the lack of fusion or the occurrence of slag inclusions. Thus, the welding speed v is preferably set at 20 to 60 cm/min.

### (Welding Amount Per Unit Welding Length: 1.8 to 4.5 g/cm)

A welding amount per unit welding length is calculated by a ratio of the feeding speed of the welding wire to the welding speed (feeding speed/welding speed) . When the welding amount per unit welding length is less than 1.8 g/cm, the total welding amount is extremely small, which might degrade the welding efficiency. On the other hand, when the welding amount per unit welding length is more than 4.5 g/cm, the total welding amount becomes excessive, whereby the amount of solidified and contracted molten metal is excessive, and the penetration is formed in a pear shape. Thus, the solidifying and contracting direction becomes vertical to a final solidified portion of the weld metal, which might cause hot cracking. Thus, the welding amount per unit welding length is preferably set at 1.8 to 4.5 g/cm. The welding current and the arc voltage are adjusted as means for controlling the above-mentioned wire feeding speed within an appropriate range.

Here, a description will be given of the distance between the tip and the base metal, the tip shape, and the tip angle.

As mentioned above, a solid wire for the submerged arc welding that is the same as the high-Cr CSEF steel has a higher electric resistance, compared to solid wires for 1.25Cr-0.5Mo steel, 2.25Cr-1Mo steel and 2.25Cr-1Mo-V steel. Such a solidwire generates a large amount of Joule heat, resulting in a large welding amount. That is, even at the same welding current, the welding amount becomes larger. The amount of the generated Joule heat is increased as the distance between the tip and the base metal is increased. When the distance between the tip and the base metal is less than 20 mm, the leading end of the tip might be eroded by the arc. When the distance between the tip and the base metal exceeds 40 mm, the amount of welding might become excessive. Therefore, the distance between the tip and the base metal is preferably controlled to be at 20 to 40 mm, and more preferably 25 to 35 mm.

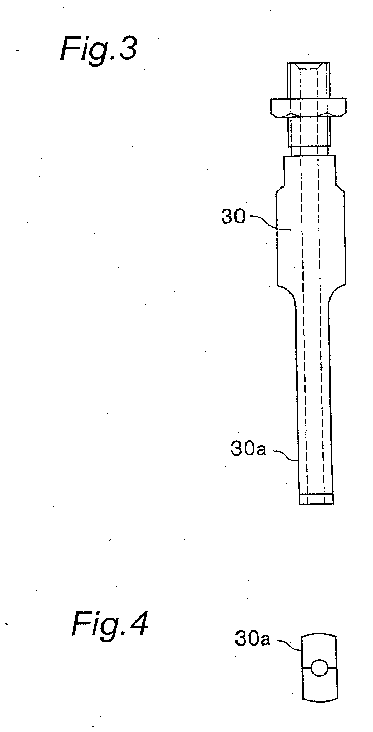

The tip shape may have a straight tube shape, a bent square tubing shape, or the shape shown in Fig. 3B of JP S62-58827 B. The tip shape is selected as appropriate in terms of ensuring the wire feedability and the stabilization of a power-feeding position. Figs. 2 to 4 illustrate an example of a tip with the bent square tubing shape. A tip 30 is bent in a range that does not to interrupt the feeding of the welding wire, which stabilizes the power-feeding position, resulting in a stabilized feeding speed of the welding wire.

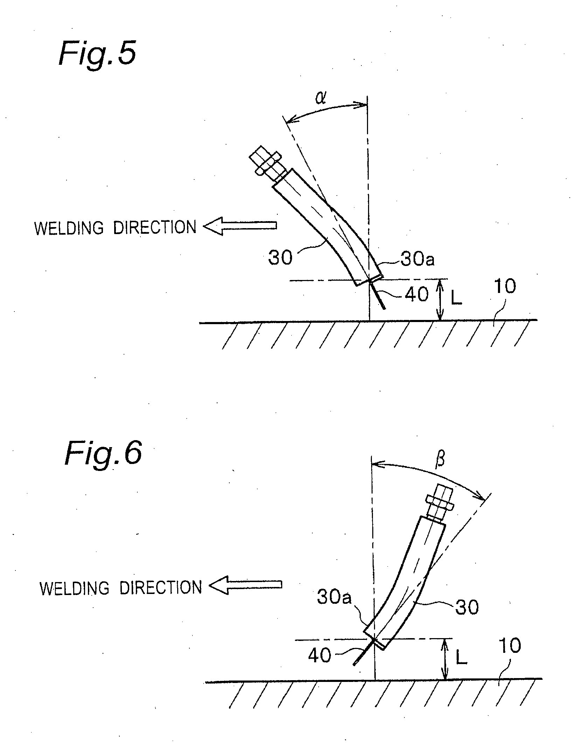

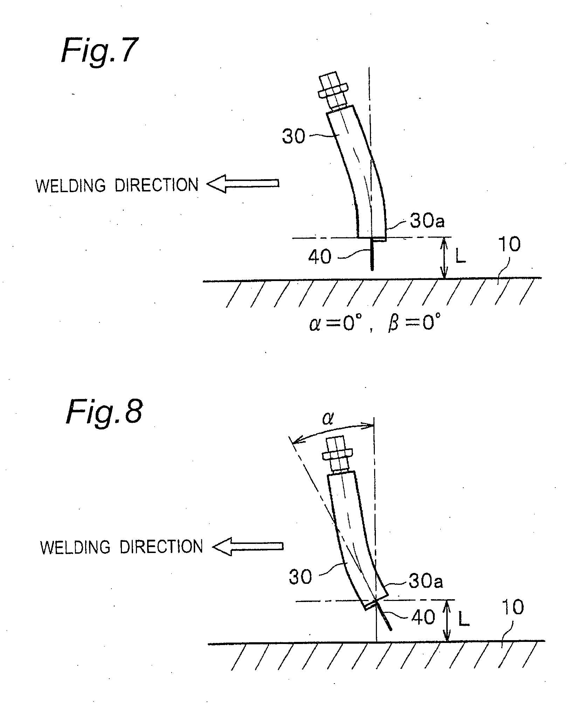

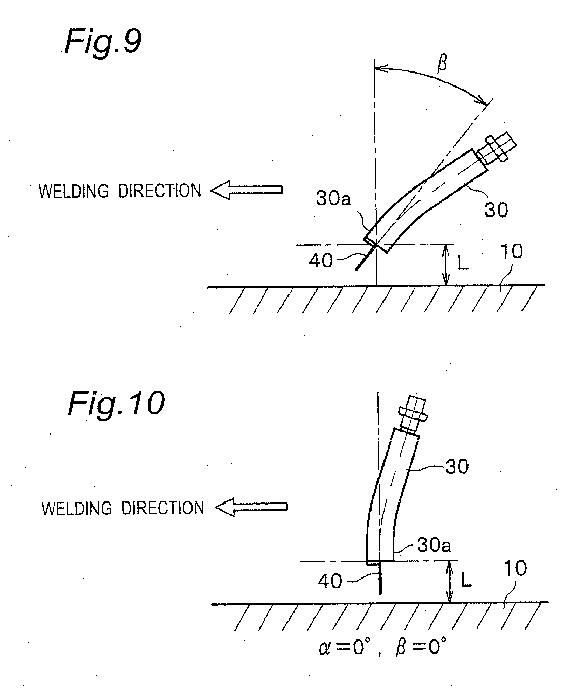

As shown in Figs. 5 to 7 and Figs. 8 to 10, the tip angle is defined as an angle that is formed by a line vertical to the surface of the base material 10 and an axial line of a leading end 30a of the tip from which the welding wire 40 is finally protruded from the tip 30. The tip angle influences the degree of heating of the welding wire with welding arc, thus consequently increasing or decreasing the feeding speed of the welding wire. Specifically, for the same welding current and the same distance L between the tip and the base metal, in comparison regarding the tip angle, the wire feeding speed at a push angle β (see Figs. 6 and 9) becomes higher than that at a drag angle α (see Figs. 5 and 8). To stabilize the feeding speed of the welding wire, the tip angle is preferably controlled such that the drag angle α is within a range up to 60° and the push angle β is within a range up to 60°.

Furthermore, the welding wire diameter, the power source characteristics, the polarity of the electricity, the thickness of a base metal, and the shape of a groove will be described.

The welding wire diameter is preferably selected as appropriate from 3 to 5 mmφ. The efficiency of the working practice might be degraded when the welding wire diameter is less than 3 mmφ. On the other hand, when the welding wire diameter exceeds 5 mmφ, hot cracking might not be prevented even by the means of the present invention. The power source characteristics may be either drooping characteristics or constant-voltage characteristics. The polarity of the electricity may be either direct current electrode positive (DCEP) or alternating current (AC) .

Preferable targets to be welded by the welding method according to the present invention include thermal power boilers and turbines, and reactors as mentioned above. Thus, the thickness of the base metal is preferably set at 150 to 450 mm. However, the welding method of the present invention can also be applied to welding for a base metal of less than 150 mm in thickness . Similarly, in the welding method of the present invention, the preferable target to be welded has a narrow groove (I groove) as shown in Fig. 1 as the groove shape of the base metal. Note that the welding method in the present invention does not exclude V connection, tandem welding by Scott connection, application to a V groove or an X groove, and the use of a groove filler, which are not shown.

The removal of the initial layer or both the initial layer and a filling layer overlapped thereon will be described below.

The welding method in the present invention is an initial-layer single submerged arc welding that will be performed only on an initial layer 21 as the preferable welding target as illustrated in Fig. 1. However, the welding method in the present invention can be used to weld not only the initial layer 21, but also another layer (not shown) of the weld metal overlapped on the initial layer 21.

The initial layer or both the initial layer and the filling layer overlapped thereon (specifically, which is referred to as a second layer, a third layer, etc., when defining the initial layer as a first layer) can be removed by gouging, machining, and the like, depending on required joint performance.

### Examples

The effects of Examples (No. 1 to No. 14) that fell within the scope of the present invention will be described by comparison with those of Comparative Examples (No. 15 to No. 48) that deviated from the scope of the present invention.

Three types of base metals with chemical compositions shown in Table 1 were prepared. As shown in Fig. 1, a narrow groove with a curvature radius R of a groove bottom of 10 mm and a groove angle θ of 4° was formed in base metals 10 having a thickness t of 250 mm, thereby producing a specimen 20.

Further, 17 types of welding wires with chemical compositions shown in Table 2 were used. The diameter of each wire was 4.0 mmφ. Furthermore, 27 types of welding fluxes with particle sizes and chemical compositions shown in Table 3 were used. Note that in Tables 2 and 3, components not satisfying the requirements of the present invention are underlined.

**[Table 1]**

| Type | Chemical composition, % by mass | | | | | | | | | | | | | | | |
|---|---|---|---|---|---|---|---|---|---|---|---|---|---|---|---|---|
| | C | Si | Mn | P | S | Ni | Cr | Mo | V | Nb | N | Cu | B | W | Co | Balance |
| B-1 | 0.120 | 0.26 | 0.52 | 0.012 | 0.001 | 0.34 | 8.98 | 1.02 | 0.21 | 0.070 | 0.036 | 0.06 | - | - | - | Fe and inevitable impurities |
| B-2 | 0.130 | 0.16 | 0.47 | 0.012 | 0.001 | 0.15 | 8.72 | 0.45 | 0.20 | 0.060 | 0.050 | 0.03 | 0.0030 | 1.50 | - | Fe and inevitable impurities |
| B-3 | 0.100 | 0.20 | 0.50 | 0.012 | 0.002 | 0.30 | 11.00 | 0.40 | 0.22 | 0.050 | 0.050 | 0.04 | 0.0020 | 1.90 | 0.005 | Fe and inevitable impurities |

**[Table 2]**

| | Type | Chemical composition, % by mass | | | | | | | | | | | | |
|---|---|---|---|---|---|---|---|---|---|---|---|---|---|---|
| | | C | N | Si | Mn | Ni | Cr | Mo | V | Nb | W | Co | B | Balance |
| Examples of the present invention | W-1 | 0.040 | 0.005 | 0.27 | 1.08 | <0.01 | <0.01 | 0.05 | <0.01 | <0.002 | <0.01 | <0.01 | <0.0002 | Fe and inevitable impurities |
| | W-2 | 0.044 | 0.001 | 0.27 | 1.10 | <0.01 | 1.40 | 0.55 | <0.01 | <0.002 | <0.01 | <0.01 | <0.0002 | Fe and inevitable impurities |
| | W-3 | 0.003 | 0.004 | 0.21 | 1.52 | <0.01 | 1.72 | 1.55 | <0.01 | <0.002 | <0.01 | <0.01 | <0.0002 | Fe and inevitable impurities |
| | W-4 | 0.030 | 0.009 | 0.27 | 1.09 | <0.01 | 2.35 | 1.05 | <0.01 | <0.002 | <0.01 | <0.01 | <0.0002 | Fe and inevitable impurities |
| | W-5 | 0.040 | 0.004 | 0.09 | 1.19 | <0.01 | 2.18 | 0.10 | 0.20 | 0.025 | 1.80 | <0.01 | 0.0009 | Fe and inevitable impurities |
| | W-6 | 0.040 | 0.038 | 0.15 | 1.88 | 0.61 | 8.76 | 0.90 | 0.19 | 0.050 | <0.01 | <0.01 | 0.0002 | Fe and inevitable impurities |
| | W-7 | 0.015 | 0.038 | 0.27 | 0.74 | 0.47 | 9.32 | 1.00 | 0.20 | 0.058 | <0.01 | <0.01 | <0.0002 | Fe and inevitable impurities |
| | W-8 | 0.044 | 0.053 | 0.23 | 0.80 | 0.48 | 9.87 | 0.33 | 0.21 | 0.040 | 1.50 | 1.20 | <0.0002 | Fe and inevitable impurities |
| Comparative Examples | W-9 | 0.070 | 0.005 | 0.26 | 1.96 | <0.01 | <0.01 | 0.15 | <0.01 | <0.002 | <0.01 | <0.01 | <0.0002 | Fe and inevitable impurities |
| | W-10 | 0.114 | 0.004 | 0.17 | 0.49 | <0.01 | 1.52 | 0.55 | <0.01 | <0.002 | <0.01 | <0.01 | <0.0002 | Fe and inevitable impurities |
| | W-11 | 0.080 | 0.007 | 0.28 | 0.76 | <0.01 | 2.67 | 1.07 | <0.01 | 0.028 | 1.76 | <0.01 | 0.0003 | Fe and inevitable impurities |
| | W-12 | 0.063 | 0.029 | 0.13 | 2.10 | 0.19 | 8.85 | 1.05 | 0.27 | 0.040 | <0.01 | <0.01 | 0.0010 | Fe and inevitable impurities |
| | W-13 | 0.056 | 0.035 | 0.25 | 0.74 | 0.47 | 9.44 | 0.99 | 0.21 | 0.057 | <0.01 | <0.01 | <0.0002 | Fe and inevitable impurities |
| | W-14 | 0.011 | 0.004 | 0.02 | 0.42 | <0.01 | <0.01 | <0.01 | <0.01 | <0.002 | <0.01 | <0.01 | 0.0002 | Fe and inevitable impurities |
| | W-15 | 0.020 | 0.003 | 0.54 | 1.41 | <0.01 | 0.14 | <0.01 | <0.01 | <0.002 | <0.01 | <0.01 | <0.0002 | Fe and inevitable impurities |
| | W-16 | 0.024 | 0.056 | 0.15 | 1.82 | 0.60 | 8.85 | 0.90 | 0.27 | 0.040 | <0.01 | <0.01 | <0.0002 | Fe and inevitable impurities |
| | W-17 | 0.032 | 0.058 | 0.23 | 0.91 | 0.62 | 10.40 | 0.26 | 0.26 | 0.046 | 1.56 | 1.11 | 0.0015 | Fe and inevitable impurities |

**[Table 3]**

| Group | Type | Particle size mesh | Chemical composition, % by mass | | | | | | | | |
|---|---|---|---|---|---|---|---|---|---|---|---|
| | | | CaF₂ | CaO | MgO | Al₂O₃ | Si and SiO₂ (in total in terms of SiO₂) | BaO | ZrO₂ | TiO₂ | Others |
| | F-1 | 10 × 48 | 10.6 | 18.2 | 38.0 | 17.3 | 5.3 | | | | 10.6 |
| | F-2 | 10 × 48 | 28.6 | 11.1 | 31.6 | 7.1 | 9.7 | | | | 11.9 |
| | F-3 | 10 × 48 | 14.9 | 7.4 | 29.0 | 22.6 | 15.2 | | 2.4 | | 8.5 |
| | F-4 | 10 × 48 | 11.7 | 7.2 | 27.0 | 19.5 | 16.3 | 5.4 | 1.7 | | 11.2 |
| Examples of the present invention | F-5 | 10 × 48 | 9.6 | 7.1 | 25.6 | 19.4 | 17.0 | 9.0 | 1.2 | | 11.1 |
| | F-6 | 10 × 48 | 7.4 | 7.0 | 24.2 | 19.3 | 17.7 | 12.6 | 0.7 | | 11.1 |
| | F-7 | 10 × 48 | 4.2 | 3.8 | 22.2 | 19.1 | 18.8 | 18.0 | 4.6 | | 9.3 |
| | F-8 | 10 × 48 | 17.3 | 9.4 | 31.5 | 19.0 | 11.4 | | 1.2 | | 10.2 |
| | F-9 | 10 × 48 | 19.3 | 8.8 | 29.8 | 17.9 | 12.5 | | 1.2 | | 10.5 |
| | F-10 | 10 × 48 | 10.8 | 8.1 | 26.9 | 19.1 | 15.1 | 9.0 | 0.6 | | 10.4 |
| | F-11 | 10 × 48 | 11.8 | 7.8 | 26.0 | 18.5 | 15.7 | 9.0 | 0.6 | | 10.6 |
| | F-12 | 10 × 48 | 13.0 | 8.9 | 29.0 | 20.0 | 15.0 | 2.4 | | 3.5 | 11.7 |
| | F-13 | 10 × 48 | 14.0 | 8.4 | 28.4 | 19.3 | 14.6 | 5.7 | | 1.8 | 9.6 |
| | F-14 | 10 × 48 | 11.5 | 9.0 | 27.8 | 18.6 | 14.2 | 9.0 | | | 9.9 |
| | F-15 | 10 × 48 | 1.3 | 3.8 | 22.3 | 19.2 | 18.8 | 19.0 | 4.6 | | 11.0 |
| | F-16 | 10 × 48 | 31.2 | 10.1 | 30.6 | 7.1 | 9.7 | | | | 11.3 |
| | F-17 | 10 × 48 | 7.0 | 1.4 | 21.0 | 19.0 | 17.8 | 18.5 | 4.6 | | 10.7 |
| | F-18 | 10 × 48 | 10.6 | 21.2 | 38.0 | 17.3 | 5.3 | | | | 7.6 |
| | F-19 | 10 × 48 | 6.2 | 3.9 | 19.1 | 19.0 | 18.8 | 18.0 | 4.6 | | 10.4 |
| Comparative Examples | F-20 | 10 × 48 | 10.6 | 18.2 | 42.4 | 17.3 | 5.3 | | 0.1 | | 6.1 |
| | F-21 | 10 × 48 | 27.9 | 11.1 | 31.6 | 4.2 | 13.7 | | 0.1 | | 11.4 |
| | F-22 | 10 × 48 | 7.0 | 7.0 | 29.0 | 26.0 | 17.6 | 3.0 | 0.2 | | 10.2 |
| | F-23 | 10 × 48 | 10.6 | 18.2 | 38.0 | 17.3 | 4.4 | | 0.5 | | 11.0 |
| | F-24 | 10 × 48 | 3.8 | 3.8 | 23.6 | 19.1 | 26.1 | 18.0 | 2.6 | | 3.0 |
| | F-25 | 10 × 48 | 4.0 | 3.8 | 21.1 | 18.0 | 18.8 | 25.7 | 4.6 | | 4.0 |
| | F-26 | 10 × 48 | 4.0 | 4.0 | 25.0 | 19.1 | 18.8 | 18.0 | 10.6 | | 0.5 |
| | F-27 | 10 × 48 | 4.0 | 4.0 | 25.0 | 19.1 | 18.8 | 18.0 | | 5.1 | 11.1 |

Submerged arc welding was performed on the inside of a narrow groove of the specimen 20 in each sample as shown in Fig. 1 by using the welding wire mentioned in Table 2 and the welding flux mentioned in Table 3, while changing the welding-wire feeding speed and welding speed. The welding-wire feeding speed was controlled by changing the welding current and welding speed.

The welding conditions were as follows. Other conditions are shown in Table 4.

### (Welding Conditions)

Tip: a leading-end bent tip 30 (a tip having a bent square tubing shape) shown in Figs. 2 to 4
Electrode Characteristics: Drooping Characteristics
Electrode Polarity: AC single
Welding Position: Flat
Overlapping Method: one-layer-one-pass procedure for the initial layer

**[Table 4]**

| Welding current A | Welding voltage V | Tip-base metal distance mm | Tip angle ° | Wire feeding speed g/cm | Welding speed cm/min | Welding amount per unit welding length g/cm |
|---|---|---|---|---|---|---|
| 400 | 31 | 30 | 0 | 80 | 40 | 2.0 |

### (Evaluation Methods)

After the end of the welding, the welded specimen 20 in each example was visually observed to evaluate the hot cracking, wettability, bead shape, bead surface texture, slag sticking, and pock marks. The evaluation methods for the hot cracking, wettability, bead shape, bead surface texture, slag sticking, and pock marks were as follows.

### (1) Hot cracking

Within a range of 300 mm of the weld bead other than the start and end parts thereof, the microstructure of the cross-section of each piece obtained by cutting the weld bead every 50 mm was observed. Examples in which no crack occurred in all five cross-sections were graded "P" (pass), while Examples in which any crack occurred were graded "F" (fail).

### (2) Wettability

Within a range of 300 mm of the weld bead other than the start and end parts thereof, the microstructure of the cross-section of each piece obtained by cutting the weld bead every 50 mm was observed. Examples in which the shape of the toe of the bead at each of all five cross-sections was smooth were graded pass (P), while other remaining Examples were graded fail (F) .

The evaluation of the bead shape was done by visually observing the height of an excess weld part of a bead in the welding line direction. Examples in which the smooth bead was formed were graded "P" (pass), while Examples in which the formed bead had rough surfaces with large irregularities in the welding line direction were graded "F" (fail).

### (4) Bead Surface Texture

Within a range of 300 mm of the weld bead other than the start and end parts thereof, the presence or absence of uneven ripples (seams) in the welding line direction were observed visually. Examples with no uneven ripple were graded pass (P), while Examples having uneven ripples were graded fail (F).

### (5) Slag Sticking

The flux stuck to the bead surface after the end of the welding was tapped with a hammer three times. Examples in which a slag was easily removed were graded pass (P), while Examples in which a slag was not removed were graded fail (F).

### (6) Pock Mark

Within a range of 300 mm of the weld bead other than the start and end parts thereof, the number of generated pock marks on the bead surface was counted visually. Examples with five or less pock marks were graded pass (P), while Examples with six or more pock marks were graded fail (F).

The evaluation results of the hot cracking, wettability, bead shape, bead surface texture, slag sticking, and pock marks in respective Examples and Comparative Examples were shown in Tables 5 and 6. Note that in Table 6, components not satisfying the requirements of the present invention are underlined.

**[Table 5]**

| Group | No. | Base metal | Wire | Flux | Properties | | | | | |
|---|---|---|---|---|---|---|---|---|---|---|
| | | | | | Hot cracking | Wettability | Bead shape | Bead surface texture | Slag sticking | Pock mark |
| | 1 | B-1 | W-1 | F-11 | P | P | P | P | P | P |
| | 2 | B-1 | W-2 | F-2 | P | P | P | P | P | P |
| | 3 | B-1 | W-3 | F-3 | P | P | P | P | P | P |
| | 4 | B-1 | W-4 | F-5 | P | P | P | P | P | P |
| | 5 | B-3 | W-5 | F-4 | P | P | P | P | P | P |
| Examples | 6 | B-1 | W-6 | F-6 | P | P | P | P | P | P |
| | 7 | B-1 | W-7 | F-7 | P | P | P | P | P | P |
| | 8 | B-2 | W-8 | F-8 | P | P | P | P | P | P |
| | 9 | B-3 | W-8 | F-9 | P | P | P | P | P | P |
| | 10 | B-2 | W-5 | F-10 | P | P | P | P | P | P |
| | 11 | B-1 | W-6 | F-13 | P | P | P | P | P | P |
| | 12 | B-1 | W-7 | F-14 | P | P | P | P | P | P |
| | 13 | B-1 | W-6 | F-1 | P | P | P | P | P | P |
| | 14 | B-1 | W-7 | F-12 | P | P | P | P | P | P |

**[Table 6]**

| Group | No. | Base metal | Wire | Flux | Properties | | | | | |
|---|---|---|---|---|---|---|---|---|---|---|
| | | | | | Hot cracking | Wettability | Bead shape | Bead surface texture | Slag sticking | Pock mark |
| | 15 | B-1 | W-9 | F-3 | F | P | P | P | P | P |
| | 16 | B-1 | W-10 | F-4 | F | P | P | P | P | P |
| | 17 | B-2 | W-11 | F-5 | F | P | P | P | P | P |
| | 18 | B-1 | W-12 | F-6 | F | P | P | P | P | P |
| | 19 | B-1 | W-13 | F-7 | F | P | P | P | P | P |
| | 20 | B-1 | W-14 | F-1 | P | F | F | P | P | P |
| | 21 | B-1 | W-15 | F-2 | P | P | P | P | F | P |
| | 22 | B-1 | W-16 | F-3 | P | P | P | P | F | P |
| | 23 | B-2 | W-17 | F-4 | P | P | P | P | F | P |
| | 24 | B-1 | W-1 | F-15 | P | P | F | P | P | P |
| | 25 | B-1 | W-2 | F-16 | P | P | P | F | P | F |
| | 26 | B-1 | W-3 | F-17 | P | P | F | P | P | P |
| | 27 | B-1 | W-4 | F-18 | P | P | P | F | P | P |
| | 28 | B-3 | W-5 | F-19 | P | P | F | P | P | P |
| | 29 | B-1 | W-1 | F-20 | P | P | P | F | P | P |
| Comparative Examples | 30 | B-1 | W-2 | F-21 | P | P | F | F | P | P |
| | 31 | B-1 | W-3 | F-22 | P | P | P | P | F | P |
| | 32 | B-1 | W-4 | F-23 | P | F | P | P | P | P |
| | 33 | B-3 | W-5 | F-24 | P | P | P | F | F | P |
| | 34 | B-1 | W-1 | F-25 | P | P | P | F | P | P |
| | 35 | B-1 | W-2 | F-26 | P | P | P | F | P | P |
| | 36 | B-1 | W-3 | F-27 | P | P | P | P | F | P |
| | 37 | B-1 | W-9 | F-17 | F | P | F | P | P | P |
| | 38 | B-2 | W-10 | F-21 | F | P | F | F | P | P |
| | 39 | B-1 | W-11 | F-15 | F | P | F | P | P | P |
| | 40 | B-1 | W-12 | F-16 | F | P | P | F | P | F |
| | 41 | B-1 | W-13 | F-17 | F | P | F | P | P | P |
| | 42 | B-1 | W-14 | F-18 | P | F | F | F | P | P |
| | 43 | B-1 | W-15 | F-19 | P | P | F | P | F | P |
| | 44 | B-1 | W-16 | F-20 | P | P | P | F | F | P |
| | 45 | B-2 | W-17 | F-21 | P | P | F | F | F | P |
| | 46 | B-1 | W-9 | F-22 | F | P | P | P | F | P |
| | 47 | B-1 | W-10 | F-23 | F | F | P | P | P | P |
| | 48 | B-2 | W-11 | F-24 | F | P | P | F | F | P |

As shown in Table 5, Examples 1 to 14 satisfied the scope of the present invention and were superior in all criteria of the hot cracking, wettability, bead shape, bead surface texture, slag sticking, and pock marks. In contrast, Comparative Examples 15 to 48 did not satisfy the scope of the present invention and were inferior in at least one of the hot cracking, wettability, bead shape, bead surface texture, slag sticking, and pock marks.

In Comparative Examples 15 to 23, the respective chemical compositions of the welding wires deviated from the scope of the present invention, and thus these comparative examples were inferior in at least one of the hot cracking, wettability, bead shape, and slag sticking. In Comparative Examples 24 to 36, the respective chemical compositions of the welding fluxes deviated from the scope of the present invention, and thus these comparative examples were inferior in the property of at least one of the wettability, bead shape, bead surface texture, slag sticking, and pock marks. In Comparative Examples 37 to 48, the respective chemical compositions of the welding wires and the welding fluxes deviated from the scope of the present invention, and thus these comparative examples were inferior in at least one of the hot cracking, wettability, bead shape, bead surface texture, slag sticking, and pock marks.

### [Description of Reference Numerals]

- 10:: Base metal (Material to be welded)
- 20:: Specimen
- 21:: Initial layer
- 30:: Tip
- 30a:: Leading end
- 40:: Welding wire

## Claims

1. A method of single submerged arc welding of a high-Cr CSEF steel, which comprises single submerged arc welding using a combination of:
a welding wire (40) comprising less than 0.05% by mass of C, 0.055% by mass or less of N, and more than 0.05% by mass and 0.50% by mass or less of Si, with the balance being Fe and inevitable impurities, and
a welding flux comprising 2 to 30% by mass of CaF₂, 2 to 20% by mass of CaO, 20 to 40% by mass of MgO, 5 to 25% by mass of Al₂O₃, and 5 to 25% by mass of Si and SiO₂ in total (in terms of SiO₂), and further comprising, in limited amounts, 25% by mass or less of BaO, 10% by mass or less of ZrO₂, and less than 5% by mass of TiO₂,
wherein the high-Cr CSEF steel is a high-Cr Creep Strength-Enhanced Ferritic steel and includes
0.07 to 0.14% by mass of C,
0.50% by mass or less of Si,
0.70% by mass or less of Mn,
0.025% by mass or less of P,
0.015% by mass or less of S,
0.50% by mass or less of Ni,
8.00 to 11.50% by mass of Cr,
0.25 to 1.10% by mass of Mo,
0.15 to 0.35% by mass of V,
0.04 to 0.10% by mass of Nb, and
0.03 to 0.10% by mass of N,
optionally
1.70% by mass or less of Cu,
0.060% by mass or less of B,
2.50% by mass or less of W, and
3.0% by mass or less of Co,
with the balance being Fe and inevitable impurities.

2. The method according to claim 1, wherein the welding wire (40) further comprises one or more elements selected from Mn, Ni, Cr, Mo, V, Nb, W, Co, and B,
wherein a Mn content is 2.20% by mass or less, a Ni content is 1.00% by mass or less, a Cr content is 10.50% by mass or less, a Mo content is 1.20% by mass or less, a V content is 0.45% by mass or less, a Nb content is 0.080% by mass or less, a W content is 2.0% by mass or less, a Co content is 3.0% by mass or less, and a B content is 0.005% by mass or less.

3. The method according to claim 1 or 2, which performs the welding at a wire feeding speed (V) of 50 to 120 g/min, a welding speed (v) of 20 to 60 cm/min, and a welding amount per unit length (V/v) of 1.8 to 4.5 g/cm that is determined by calculating the ratio of the wire feeding speed to the welding speed.

4. The method according to claim 3, wherein a distance between a tip (30) and a base metal (10) is in a range of 20 to 40 mm.

5. The method according to claim 4, wherein a tip angle is set such that a drag angle α is in a range of up to 60°, and a push angle β is in a range of up to 60°.

6. The method according to claim 5, wherein a tip angle is set such that a tip shape is a straight tube shape or a bent square tubing shape.

## Patentansprüche

1. Verfahren zum einzelnen Unterpulverschweißen von CSEF-Stahl mit hohem Cr-Gehalt, umfassend das einzelne Unterpulverschweißen unter Verwendung einer Kombination aus:
einem Schweißdraht (40), umfassend weniger als 0,05 Massenprozent von C, 0,055 Massenprozent oder weniger von N und mehr als 0,05 Massenprozent und 0,50% Massenprozent oder weniger von Si, wobei der Rest Fe und unvermeidbare Verunreinigungen ist, und
einem Schweißpulver, umfassend 2 bis 30 Massenprozent von CaF₂, 2 bis 20 Massenprozent von CaO, 20 bis 40 Massenprozent von MgO, 5 bis 25 Massenprozent von Al₂O₃ und insgesamt 5 bis 25 Massenprozent von Si und SiO₂ (bezogen auf SiO₂), und weiter umfassend, in begrenzten Mengen, 25 Massenprozent oder weniger von BaO, 10 Massenprozent oder weniger von ZrO₂ und weniger als 5 Massenprozent von TiO₂,
wobei der CSEF-Stahl mit hohem Cr-Gehalt ein ferritischer Stahl mit erhöhter Kriechfestigkeit und hohem Cr-Gehalt ist und
0,07 bis 0,14 Massenprozent von C,
0,50 Massenprozent oder weniger von Si,
0,70 Massenprozent oder weniger von Mn,
0,025 Massenprozent oder weniger von P,
0,015 Massenprozent oder weniger von S,
0,50 Massenprozent oder weniger von Ni,
8,00 bis 11,50 Massenprozent von Cr,
0,25 bis 1,10 Massenprozent von Mo,
0,15 bis 0,35 Massenprozent von V,
0,04 bis 0,10 Massenprozent von Nb, und
0,03 bis 0,10 Massenprozent von N,
gegebenenfalls
1,70 Massenprozent oder weniger von Cu,
0,060 Massenprozent oder weniger von B,
2,50 Massenprozent oder weniger von W, und
3,0 Massenprozent oder weniger von Co enthält,
wobei der Rest Fe und unvermeidbare Verunreinigungen ist.

2. Verfahren nach Anspruch 1, wobei der Schweißdraht (40) weiter ein oder mehrere Elemente, ausgewählt aus Mn, Ni, Cr, Mo, V, Nb, W, Co und B, umfasst,
wobei ein Mn-Gehalt 2,20 Massenprozent oder weniger beträgt, ein Ni-Gehalt 1,00 Massenprozent oder weniger beträgt, ein Cr-Gehalt 10,50 Massenprozent oder weniger beträgt, ein Mo-Gehalt 1,20 Massenprozent oder weniger beträgt, ein V-Gehalt 0,45 Massenprozent oder weniger beträgt, ein Nb-Gehalt 0,080 Massenprozent oder weniger beträgt, ein W-Gehalt 2,0 Massenprozent oder weniger beträgt, ein Co-Gehalt 3,0 Massenprozent oder weniger beträgt und ein B-Gehalt 0,005% Massenprozent oder weniger beträgt.

3. Verfahren nach Anspruch 1 oder 2, in welchem das Schweißen mit einer Drahtvorschubgeschwindigkeit (V) von 50 bis 120 g/min, einer Schweißgeschwindigkeit (v) von 20 bis 60 cm/min und einer Schweißmenge pro Längeneinheit (V/v) von 1,8 bis 4,5 g/cm, die durch Berechnung des Verhältnisses der Drahtvorschubgeschwindigkeit zu der Schweißgeschwindigkeit bestimmt wird, durchführt wird.

4. Verfahren nach Anspruch 3, wobei ein Abstand zwischen einer Spitze (30) und einem Grundmetall (10) in einem Bereich von 20 bis 40 mm liegt.

5. Verfahren nach Anspruch 4, wobei ein Spitzenwinkel derart eingestellt ist, dass ein Riefenwinkel α in einem Bereich von bis zu 60° liegt und ein Verschiebewinkel β in einem Bereich von bis zu 60° liegt.

6. Verfahren nach Anspruch 5, wobei ein Spitzenwinkel derart eingestellt ist, dass eine Spitzenform eine gerade Rohrform oder eine gebogene, quadratische Rohrform ist.

## Revendications

1. Procédé de soudage à l'arc submergé unique d'un acier CSEF à teneur élevée en Cr, qui comprend un soudage à l'arc submergé unique utilisant une combinaison de :
un fil à souder (40) comprenant moins de 0,05 % en masse de C, 0,055 % en masse ou moins de N, et plus de 0,05 % en masse et 0,50 % en masse ou moins de Si, avec l'équilibre qui est Fe et d'inévitables impuretés, et
un flux de soudure comprenant 2 à 30 % en masse de CaF₂, 2 à 20 % en masse de CaO, 20 à 40 % en masse de MgO, 5 à 25 % en masse de Al₂O₃, et 5 à 25 % en masse de Si et SiO₂ au total (en termes de SiO₂), et comprenant en outre, en quantités limitées, 25 % en masse ou moins de BaO, 10 % en masse ou moins de ZrO₂, et moins de 5 % en masse de TiO₂,
dans lequel l'acier CSEF à teneur élevée en Cr est un acier ferritique à résistance au fluage amplifiée à teneur élevée en Cr et inclut
0,07 à 0,14 % en masse de C,
0,50 % en masse ou moins de Si,
0,70 % en masse ou moins de Mn,
0,025 % en masse ou moins de P,
0,015 % en masse ou moins de S,
0,50 % en masse ou moins de Ni,
8,00 à 11,50 % en masse de Cr,
0,25 à 1,10 % en masse de Mo,
0,15 à 0,35 % en masse de V,
0,04 à 0,10 % en masse de Nb, et
0,03 à 0,10 % en masse de N,
en option
1,70 % en masse ou moins de Cu,
0,060 % en masse ou moins de B,
2,50 % en masse ou moins de W, et
3,0 % en masse ou moins de Co,
avec l'équilibre qui est Fe et d'inévitables impuretés.

2. Procédé selon la revendication 1, dans lequel le fil à souder (40) comprend en outre un ou plusieurs éléments sélectionnés parmi Mn, Ni, Cr, Mo, V, Nb, W, Co et B,
dans lequel une teneur en Mn est de 2,20 % en masse ou moins, une teneur en Ni est de 1,00 % en masse ou moins, une teneur en Cr est de 10,50 % en masse ou moins, une teneur en Mo est de 1,20 % en masse ou moins, une teneur en V est de 0,45 % en masse ou moins, une teneur en Nb est de 0,080 % en masse ou moins, une teneur en W est de 2,0 % en masse ou moins, une teneur en Co est de 3,0 % en masse ou moins, et une teneur en B est de 0,005 % en masse ou moins.

3. Procédé selon la revendication 1 ou 2, qui réalise le soudage à une vitesse d'alimentation en fil (V) de 50 à 120 g/min, une vitesse de soudage (v) de 20 à 60 cm/min, et une quantité de soudage par longueur unitaire (V/v) de 1,8 à 4,5 g/cm qui est déterminée en calculant le rapport de la vitesse d'alimentation en fil sur la vitesse de soudage.

4. Procédé selon la revendication 3, dans lequel une distance entre une pointe (30) et un métal de base (10) est dans une plage de 20 à 40 mm.

5. Procédé selon la revendication 4, dans lequel un angle de pointe est réglé de sorte qu'un angle de tirage α est dans une plage allant jusqu'à 60°, et un angle de poussée β est dans une plage allant jusqu'à 60°.

6. Procédé selon la revendication 5, dans lequel un angle de pointe est réglé de sorte qu'une forme de pointe est une forme tubulaire droite ou une forme de tubage carré plié.
